## Europäisches Patentamt
## European Patent Office
## Office européen des brevets

(19)

(11) Veröffentlichungsnummer : **0 005 259**
**B1**

(12) # EUROPÄISCHE PATENTSCHRIFT

(45) Veröffentlichungstag der Patentschrift :
21.10.81

(21) Anmeldenummer : 79101318.8

(22) Anmeldetag : 02.05.79

(51) Int. Cl.³ : **F 24 F 7/013, E 06 B 7/02,**
**F 24 F 5/00**

(54) Einrichtung zur Klimatisierung eines geschlossenen Raumes.

(30) Priorität : 08.05.78 DE 2819997

(43) Veröffentlichungstag der Anmeldung :
14.11.79 (Patentblatt 79/23)

(45) Bekanntmachung des Hinweises auf die Patenterteilung : 21.10.81 Patentblatt 81/42

(84) Benannte Vertragsstaaten :
AT CH FR GB NL

(56) Entgegenhaltungen :
CH - A - 378 496
DE - A - 2 518 252
DE - A - 2 529 932
DE - A - 2 632 669
DE - B - 1 266 472

(73) Patentinhaber : Eltreva AG
Hauptstrasse 107
CH-4147 Aesch (CH)

(72) Erfinder : Schmidlin, Hans
Brüelweg 47
CH-4147 Aesch (CH)

(74) Vertreter : Gramm, Werner, Dipl.-Ing. et al
Patentanwälte Gramm + Lins Theo-
dor-Heuss-Strasse 2
D-3300 Braunschweig (DE)

Anmerkung : Innerhalb von neun Monaten nach der Bekanntmachung des Hinweises auf die Erteiluhg des
europäischen Patents Im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

Imprimerie Jouve, 17, rue du Louvre, 75001 Paris, France

EP 0 005 259 B1

« Einrichtung zur Klimatisierung eines geschlossenen Raumes »

Die Erfindung betrifft eine Einrichtung zur Klimatisierung eines geschlossenen Raumes, der auf seiner Wetteraußenseite eine Außenverglasung aufweist, die mit einer im Abstand von ihr rauminnenseitig angeordneten Innenverglasung einen Abluftkanal bildet, wobei auf der Rauminnenseite der Innenverglasung ein Sonnenstore vorgesehen ist, der mit der Innenverglasung einen Zwischenraum einschließt, der über eine verschließbare Luftabsaugöffnung mit dem genannten Abluftkanal in Verbindung steht.

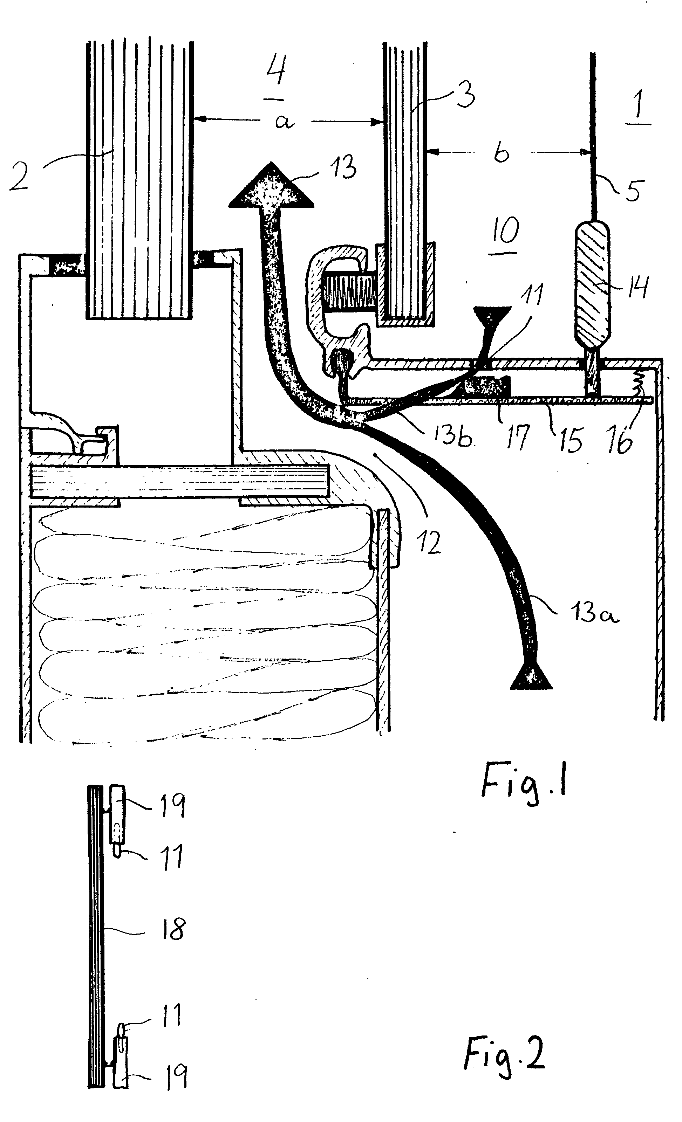

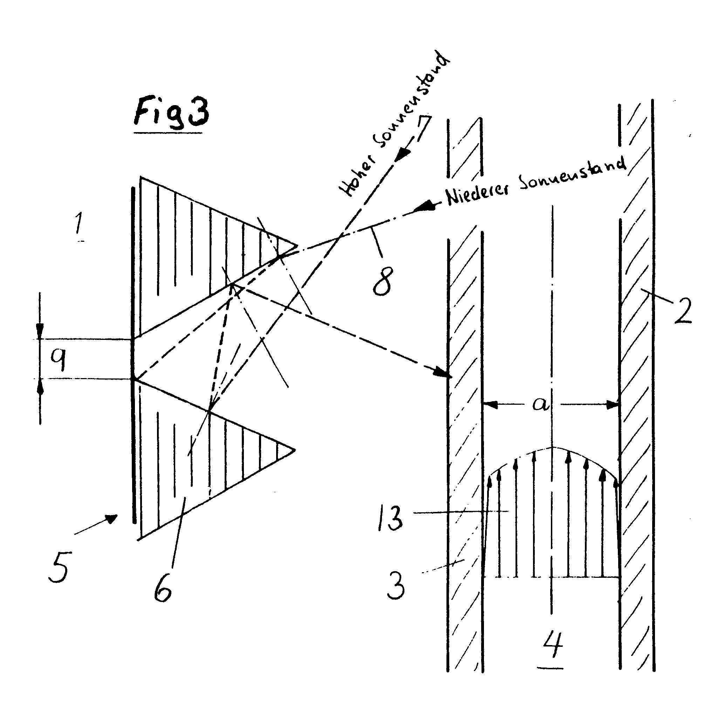

Eine derartige Ausführungsform läßt sich der DE-A-26 32 669 entnehmen. Die genannte Luftabsaugöffnung ist über eine Luftregelklappe verschließbar. Bei der in Figur 1 dieser Druckschrift dargestellten Stellung dieser Luftregelklappe strömt aus dem geschlossenen Raum Abluft ausschließlich durch den Zwischenraum zwischen Sonnenstore bzw. Rollo und Innenverglasung und von dort in einen Absaugkasten, in den auch der Abluftkanal mündet. Bei der in Figur 2 dieser Vorveröffentlichung dargestellten Stellung der Luftregelklappe strömt die Abluft ausschließlich durch den Abluftkanal und von dort in den genannten Absaugkasten. Da die Luftregelklappe auch Zwischenstellungen einnehmen kann, ergeben sich entsprechend prozentual verteilte Absaugmengen über die beschriebenen Strömungswege. Dabei können als Parameter für die Steuerung der Luftregelklappe und damit der Mengenverhältnisse der durch die beiden Kanäle abgesaugten Luft neben der Raumtemperatur und der Außenlufttemperatur auch noch die Raumluftfeuchte und die Intensität des Einfalls der Sonnenstrahlung mit einbezogen werden.

Die über dem Absaugkasten insgesamt abgesaugte Luftmenge soll üblicherweise konstant bleiben und beträgt beispielsweise 100 m³/h. Bei dem in Figur 2 der genannten Vorveröffentlichung dargestellten Winterbetrieb würde die gesamte Luftmenge als Abluft durch den Abluftkanal abgesaugt werden. Würde dann die Luftregelklappe den innenliegenden Abluftkanal etwas öffnen, würde eine Teilluftmenge aus dem innenliegenden Kanal abgesaugt werden. Um eben diese Teilluftmenge würde die aus dem Abluftkanal abgesaugte Luft verringert werden, wenn die insgesamt abgesaugte Luftmenge konstant bleiben soll. Bei dieser vorbekannten Konstruktion ändert sich also die durch den Abluftkanal strömende Abluft mengenmäßig in Abhängigkeit von der jeweiligen Stellung der Luftregelklappe. Da der Strömungsquerschnitt des Abluftkanals konstant bleibt, müssen sich bei wechselnden Luftmengen pro Zeiteinheit in diesem Abluftkanal zwangsläufig unterschiedliche Strömungsverhältnisse einstellen. Die Erzielung einer weitgehend laminaren Strömung ist somit ausgeschlossen.

Ein wesentlicher Nachteil bei der Ausführungsform gemäß der DE-A-26 32 669 ist darin zu sehen, daß sich in dem Abluftkanal unkontrollierte Luftverwirbelungen ergeben. Dies ist nachteilig hinsichtlich der auf der Rauminnenseite der Außenverglasung unter allen Umständen zu verhindernden Kondensierung sowie hinsichtlich der im Sommer aus dem Abluftkanal abzutransportierenden Wärmeenergie.

Nachteilig ist ferner, daß der Sonnenstore bzw. das genannte Rollo nicht gezielt für die Klimatisierung des Raumes eingesetzt wird.

Nachteilig ist darüber hinaus, daß für die Steuerung der Luftregelklappe die Raumtemperatur, die Außenlufttemperatur, die Raumluftfeuchte und/oder die Intensität des Einfalls der Sonnenstrahlung herangezogen werden. So wäre es also grundsätzlich möglich, die Luftregelklappe in die in Figur 1 der Vorveröffentlichung dargestellte Position zu verschwenken (vollständiger Abschluß des Abluftkanals), obwohl beispielsweise das Rollo hochgezogen ist, also gar kein innerer Abluftkanal für die Abluft existiert.

Der Erfindung liegt somit die Aufgabe zugrunde, die eingangs beschriebene Einrichtung so zu verbessern, daß eine Kondensierung auf der Rauminnenseite der Außenverglasung mit Sicherheit verhindert und die Klimatisierung des Raumes verbessert werden.

Diese Aufgabe wird gemäß der Erfindung durch folgende Merkmale gelöst :

a) Der Abstand a zwischen Außen- und Innenverglasung ist nur so groß, daß sich im Abluftkanal eine definierte, weitgehend laminare Luftströmung einstellt ;

b) die der Innenverglasung zugekehrte Fläche des Sonnenstores ist so ausgebildet, daß ein möglichst großer Anteil der auftreffenden Sonnenstrahlung gegen die Innenverglasung reflektiert wird ;

c) die Öffnung der verschließbaren Luftabsaugöffnung wird in Abhängigkeit von der Stellung des Sonnenstores und/oder der Temperatur in dem Zwischenraum zwischen Innenverglasung und Sonnenstore gesteuert ;

d) die Luftabsaugöffnungen münden in den Absaugkanal des Abluftkanals.

Grundsätzlich sind laminare Luftströmungen bereits durch die DE-A-25 18 252 bei vergleichbaren Klimatisierungseinrichtungen bekanntgeworden. Gemäß der in dieser Vorveröffentlichung offenbarten Lehre soll in einem Paneelzwischenraum eine weitgehend laminare Strömung stattfinden. Hierfür sind entsprechende Luftleitbleche vorgesehen. Die aus diesem Paneelzwischenraum ausströmende Warmluft wird über düsenartige Einsätze gegen die Innenfläche der Außenscheibe geleitet, um ein Beschlagen derselben wirksam zu verhindern. Die hier aufsteigende Warmluft soll dann ohne Wirbelbildung durch in Austrittsöffnungen eingesetzte düsenartige Einsätze in den Abluftkanal geleitet werden.

Die bei dieser vorbekannten Einrichtung angestrebte laminare Strömung soll also nicht zwischen Außen- und Innenverglasung erfolgen. Eine laminare Strömung innerhalb des Abluftkanals wäre bei dieser vorbekannten Einrichtung auch theoretisch nicht möglich, da dieser Abluftkanal eine erheblich größere Breite aufweist als der Paneelzwischenraum. Wenn in letzterem eine laminare Strömung herrschen soll, so kann bereits aufgrund der Vergrößerung des Strömungsquerschnitts nicht auch. im Abluftkanal eine laminare Strömung herrschen, zumal die aus dem Paneelzwischenraum laminar ankommende Luftströmung durch die genannten Düsen gedrückt und unmittelbar gegen die Innenseite der Außenverglasung geleitet werden soll.

Ein Reflektieren der Sonnenstrahlung entsprechend dem oben zitierten Erfindungsmerkmal b) ist grundsätzlich durch die DE-B-12 66 472 bekanntgeworden. Jedoch ist bei dieser Einrichtung nur eine einzige Verglasung vorgesehen, so daß kein zwischen Außen- und Innenverglasung gebildeter Abluftkanal vorhanden ist. Die konstruktion zeigt, daß ein Sonnenschutzvorhang einen Belag aufweisen kann, der zusätzlich eine Reflexion der Strahlung aus der Fensterzone übernimmt, und daß zwischen der Verglasung und dem Sonnenschutzvorhang ein Zwischenraum vorgesehen ist, dessen Luftabsaugöffnung in Abhängigkeit von der Stellung des Sonnenstoren veränderbar ist.

Durch die erfindungsgemäß beanspruchte Gesamtkombination werden wesentliche Vorteile erreicht: Wesentlich für die Erfindung ist dabei, im Abluftkanal eine definierte, weitgehend laminare Luftströmung zu erzeugen. Dabei erfolgt die Berechnung des optimalen Abstandes zwischen Außen- und Innenverglasung unter Berücksichtigung der im Winter zu erwarten tiefsten Außentemperatur, der gewünschten relativen Luftfeuchtigkeit im Innenraum, der gewünschten Innenraumtemperatur, der zur Verfügung gestellten Luftmengen, der Wärmeabgabe des Innenraumes an den Außenraum, der gewünschten Oberflächentemperatur des Sonnenstoren im Winter, der gewünschten bzw. erforderlichen Luftmengen im Innenraum sowie unter Berücksichtigung des Standortes sowie der Orientierung des zu klimatisierenden Raumes (Klima des Landes, Orientierung der Gebäudefassade z.B. nach Süden oder Norden u.dgl.).

Als Richtwert für den Abstand zwischen Außen- und Innenverglasung ergibt sich ein Wert von etwa 40 mm, während in einer üblichen Abluftfassade der Abluftkanal eine Tiefe von etwa 200 mm aufweist. Durch diese Verringerung der Tiefe des Abluftkanals erhält man einerseits eine entsprechend geringere Bautiefe, die zu entsprechenden Kosteneinsparungen führt. Außerdem aber erhält man eine laminare Luftströmung (die turbulente Grenzströmung an den Wandungen des Abluftkanals kann hier unberücksichtigt bleiben). Hierdurch ergibt sich eine starke Verringerung des Energieverlustes der Luft im Winter. Außerdem erhält man ein definiertes Temperaturprofil von der Wetteraußenseite zur Rauminnenseite der Außenverglasung und kann dadurch in Verbindung mit der erhöhten Strömungsgeschwindigkeit eine Kondensatbildung auf der Innenseite der Außenverglasung sicher verhindern.

Um eine optimale Behaglichkeit im Sommer und im Winter zu gewährleisten, sollte die Oberflächentemperatur des Sonnenstores auf seiner Rauminnenseite möglichst nahe der Raumtemperatur liegen. Im Winter reicht zur Aufrechterhaltung einer Temperatur von 19 °C auf der Innenverglasung bei einer Raumtemperatur von 22 °C und einer Außentemperatur von − 15 °C die definierte Luftströmung durch den Abluftkanal aus. Bei hoher Sonneneinstrahlung erwärmt sich jedoch die Innenverglasung durch die von dem Sonnenstore reflektierte bzw. die von der Innenverglasung absorbierte Sonnenstrahlung auf z.B. 48 °C. Dies führt auf der Oberfläche des Sonnenstores zu einer Temperatur von etwa 32 °C. Diese Temperatur kann gemäß der Erfindung nunmehr auf annähernd Raumtemperatur gesenkt werden und zwar durch Absaugung der sich zwischen Innenverglasung und Sonnenstoren befindlichen Luft. Im Sommer wird diese Absaugung so erfolgen, daß in der aus dem genannten Zwischenraum abgesaugten Luft ein Maximum an Energie gewonnen wird. Im Winter soll hingegen möglichst wenig Energie von der Luftströmung im Abluftkanal zur Wetteraußenseite hin verlorengehen. Man kann daher die aus dem Zwischenraum zwischen Innenverglasung und Sonnenstoren abgesaugte Luft unter Umständen zu Heizzwecken verwenden.

Durch das Erfindungsmerkmal c) wird ein weiterer Vorteil erzielt: Zur Steuerung werden nunmehr die Parameter herangezogen, die sich unmittelbar aus dem Zwischenraum zwischen Innenverglasung und Sonnenstoren ergeben. Ein Hochziehen des Sonnenstores führt dadurch immer zu einem Verschließen der Luftabsaugöffnung.

Durch das Erfindungsmerkmal d) wird sichergestellt, daß unabhängig von der Steuerung der Luftabsaugöffnung immer die gleiche Luftmenge durch den Abluftkanal strömt. Der durch den Abluftkanal strömende Gesamtluftstrom setzt sich nunmehr zusammen aus einem Anteil, der aus dem Raum oder einer separaten Klimaanlage stammt, sowie aus einem aus dem Zwischenraum abgesaugten Anteil. Daher herrschen im Abluftkanal immer gleiche Strömungsbedingungen ; die eingestellte laminare Luftströmung kann daher bei allen Betriebsbedingungen aufrechterhalten werden.

Die Steuerung der Absaugquerschnitte der Luftabsaugöffnungen für den Zwischenraum zwischen Innenverglasung und Sonnenstore kann auf verschiedene Weise erfolgen. So kann beim Herablassen des Sonnenstores dessen Beschwerungsgewicht in der Endstellung des Sonnenstores auf einen Knopf oder dergleichen drücken, der über ein Gestänge die Luftabsaugöffnungen öffnet. Das Beschwerungsgewicht des Sonnenstores kann aber auch einen Schalter betätigen, der eine elektrische Öffnung der Luftabsaugöffnungen bewirkt. Beim Betätigen des Motors zum Herablassen des Sonnenstores können Elektromagnete beaufschlagt werden, die über ein Gestänge o.dgl. die Luftabsaugöffnungen öffnen. In dem Zwischenraum zwischen Innenverglasung und Sonnenstore kann auch ein z.B. aus Kunststoff bestehender Ausdehnungsstab mit hohem Ausdehnungskoeffizienten vorgesehen werden, der über die Zwischenraumtemperatur den Absaugquerschnitt der Luftabsaugöffnungen steuert. Ferner besteht die Möglichkeit, über einen Temperaturfühler einen Servomotor zur Verstellung der Luftabsaugöffnungen zu beaufschlagen.

Die Luftabsaugöffnungen können als Schlitze ausgebildet sein und sind vorzugsweise immer dort angebracht, wo die Luft am energiereichsten ist.

In einer zweckmäßigen Ausführungsform kann die der Innenverglasung zugewandte Fläche des Sonnenstoren Sektionen aufweisen, die die im Winter auftreffende Sonnenstrahlung absorbieren. Dies kann z.B. durch auf der der Innenverglasung zugewandten Fläche des Sonnenstores angeordnete Profilierungen erreicht werden, die die auftreffenden Sonnenstrahlen unmittelbar oder mittelbar über benachbarte Profilierungen gegen die Innenverglasung reflektieren, wobei zwischen den Profilierungen eine Selektivbeschichtung so angeordnet ist, daß sie nur bei niedrigem Sonnenstand von Sonnenstrahlen beaufschlagt wird.

In der Zeichnung sind einige als Beispiele dienende Ausführungsformen der Erfindung dargestellt. Es zeigen:

Figur 1 in schematischer Darstellung einen senkrecht zur Verglasung geführten Vertikalschnitt;

Figur 2 eine Steuereinrichtung für Luftabsaugöffnungen und

Figur 3 eine abgewandelte Ausführungsform in einem senkrecht zur Verglasung geführten Vertikalschnitt.

Ein zu belüftender bzw. zu klimatisierender Raum 1 weist auf seiner Wetteraußenseite eine Außenverglasung 2 auf, die mit einer im Abstand a von ihr rauminnenseitig angeordneten Innenverglasung 3 einen Abluftkanal 4 bildet. Auf der Rauminnenseite der Innerverglasung 3 ist im Abstand b ein Sonnenstoren 5 angeordnet.

Figur 3 zeigt eine spezielle Ausführungsform für den Sonnenstore 5. Dieser kann auf seiner der Innenverglasung 3 zugekehrten Oberfläche Profilierungen 6 aufweisen, die im Querschnitt angenähert dreieckförmig ausgebildet sind und zur Reflexion auftreffender Sonnenstrahlen 7, 8 dienen. Diese Profilierungen 6 verlaufen horizontal und sind mit einem lotrechten Abstand voneinander angeordnet. Der so zwischen jeweils zwei Profilierungen 6 gebildete streifenförmige Bereich 9 des Sonnenstoren 5 ist auf seiner der Innenverglasung 3 zugewandten Seite mit einer Selektivbeschichtung versehen, die diesem streifenförmigen Bereich eine erhöhte Absorption und verringerte Reflexionseigenschaften verleiht. Durch diese Ausbildung der Sonnenstoren ergibt sich folgende Wirkung:

Bei hohem Sonnenstand treffen die entsprechend steil einfallenden Sonnenstrahlen 7 nach Durchtritt durch die Außen- und Innenverglasung auf die Profilierungen 6 auf, werden hier zum größten Teil reflektiert und zwar auf die benachbarte Profilierung und von dort wiederum reflektiert in Richtung auf die Innenverglasung 3. Der überwiegende Anteil der steil einfallenden Sonnenstrahlen 7 wird somit wieder zur Wetteraußenseite reflektiert. Durch den lotrechten Abstand der Profilierungen 6 voneinander sowie durch die Höhe jeder einzelnen Profilierung ist ausgeschlossen, daß steil einfallende Sonnenstrahlen 7 unmittelbar oder mittelbar auf den selektiv beschichteten strahlenförmigen Bereich 9 des Sonnenstoren 5 auftreffen.

Die bei niedrigem Sonnenstand entsprechend flach einfallenden Sonnenstrahlen 8 können hingegen unmittelbar auf den streifenförmigen Bereich 9 auftreffen oder aber werden von den Profilierungen 6 auf diesen streifenförmigen Bereich 9 reflektiert. Aufgrund der hier vorgesehenen Selektivbeschichtung ergibt sich somit in den streifenförmigen Bereichen 9 eine entsprechend erhöhte Absorption und damit eine Aufheizung der Stores, die zur Erwärmung des Raumes 1 herangezogen werden kann.

Der Abstand a zwischen Außenverglasung 2 und Innenverglasung 3 ist so bemessen, daß sich im Abluftkanal 4 eine definierte, weitgehend laminare Luftströmung einstellt.

Figur 1 läßt erkennen, daß in dem zwischen Innenverglasung 3 und Sonnenstore 5 gebildeten Zwischenraum 10 verschließbare Luftabsaugöffnungen 11 vorgesehen sind, deren Öffnung in Abhängigkeit von der Stellung des Sonnenstores und/oder der Temperatur in diesem Zwischenraum 10 gesteuert wird. Die Luftabsaugöffnungen 11 münden in den Ansaugkanal 12 des Abluftkanals 4. Der durch den Abluftkanal 4 strömende Gesamtluftstrom 13 setzt sich somit zusammen aus einem Anteil 13a, der aus dem Raum 1 oder einer separaten Klimaanlage stammt sowie aus einem aus dem Zwischenraum 10 abgesaugten Anteil 13b. Mit dem Teilluftstrom 13b wird die Energie zwischen Innenverglasung 3 und Sonnenstore 5 abgeführt.

Figur 1 zeigt ein Beispiel zur Steuerung der Luftabsaugöffnungen 11. Beim Herablassen des Sonnenstores 5 drückt ein an dessen unterem Rand befestigtes Beschwerungsgewicht 14 auf einen Hebel 15, der in Schließstellung von einer Feder 16 mit einer Dichtungsleiste 17 gegen die Luftabsaugöffnungen 11 gezogen wird. Bei herabgelassenem Sonnenstoren 5 wird der Hebel 15 nach unten gedrückt und gibt dadurch die Luftabsaugöffnungen 11 frei.

Figur 2 zeigt schematisch eine abgewandelte Ausführungsform für eine Steuerung der Luftabsaugöffnungen 11. Die Steuerung besteht aus einem Ausdehnungsstab 18, der im Zwischenraum 10 zwischen Innenverglasung 3 und

7     **0 005 259**     8

Sonnenstore 5 angeordnet ist und Schieber 19 trägt, die je nach Ausdehnung des Ausdehnungsstabes 18 stufenlos den Querschnitt der Luftabsaugöffnungen 11 vergrößern oder verkleinern.

**Ansprüche**

1. Einrichtung zur Klimatisierung eines geschlossenen Raumes, der auf seiner Wetteraußenseite eine Außenverglasung (2) aufweist, die mit einer im Abstand von ihr rauminnenseitig angeordneten Innenverglasung (3) einen Abluftkanal (4) bildet, wobei auf der Rauminnenseite der Innenverglasung ein Sonnenstore (5) vorgesehen ist, der mit der Innenverglasung einen Zwischenraum (10) einschließt, der über eine verschließbare Luftabsaugöffnung (11) mit dem genannten Abluftkanal in Verbindung steht, gekennzeichnet durch folgende Merkmale :

a) Der Abstand a zwischen Außen- (2) und Innenverglasung (3) ist nur so groß, daß sich im Abluftkanal (4) eine definierte, weitgehend laminare Luftströmung (13) einstellt ;

b) die der Innenverglasung (3) zugekehrte Fläche des Sonnenstores (5) ist so ausgebildet, daß ein möglichst großer Anteil der auftreffenden Sonnenstrahlung (7) gegen die Innenverglasung reflektiert wird ;

c) die Öffnung der verschließbaren Luftabsaugöffnung (11) wird in Abhängigkeit von der Stellung des Sonnenstores (5) und/oder der Temperatur in dem Zwischenraum (10) zwischen Innenverglasung (3) und Sonnenstore (5) gesteuert ;

d) die Luftabsaugöffnungen (11) münden in den Ansaugkanal (12) des Abluftkanals (4).

2. Einrichtung nach Anspruch 1, dadurch gekennzeichnet, daß der Abstand (a) zwischen Außen- (2) und Innenverglasung (3) etwa 40 mm beträgt.

3. Einrichtung nach Anspruch 1 oder 2, dadurch gekennzeichnet, daß der Abstand (b) zwischen Innenverglasung (3) und Sonnenstore (5) zwischen etwa 20 und 40 mm liegt.

4. Einrichtung nach einem der vorhergehenden Ansprüche, dadurch gekennzeichnet, daß die der Innenverglasung (3) zugewandte Fläche des Sonnenstores (5) Sektionen (9) aufweist, die die im Winter auftreffende Sonnenstrahlung (8) absorbieren.

5. Einrichtung nach Anspruch 4, dadurch gekennzeichnet, daß die der Innenverglasung (3) zugewandte Fläche des Sonnenstores (5) Profilierungen (6) aufweist, die die auftreffenden Sonnenstrahlen (7) unmittelbar oder mittelbar über benachbarte Profilierungen gegen die Innenverglasung (3) reflektieren, wobei zwischen den Profilierungen (6) eine Selektivbeschichtung so angeordnet ist, daß sie nur bei niedrigem Sonnenstand von Sonnenstrahlen (8) beaufschlagt wird.

**Claims**

1. Facility for environment control in an enclosed space, on the weather-facing outside of which is arranged an outer glazing (2) which forms an air exhaust channel (4) with an inner glazing (3) arranged at a distance from it facing the inside of the space, whereby a sun screen (5) is arranged on the side of the inner glazing which faces the inside of the space, the sunscreen and the inner glazing enclosing an intermediate space (10), and whereby the intermediate space is in communication with the said air exhaust channel via a closable opening (11) for sucking air out characterised by the following features :

a) the distance a between outer (2) and inner glazing (3) is just large enough to create a defined, largely laminair air current (13) in the air exhaust channel (4) ;

b) the surface of the sun screen (5) facing the inner glazing (3) is designed so that the largest possible part of the incident sun radiation (7) is reflected against the inner glazing ;

c) the opening of the closable air exhaust opening (11) is controlled as a function of the position of the sun screen (5) and/or the temperature in the intermediate space (10) between inner glazing (3) and sun screen (5) ;

d) the air exhaust openings (11) open into the channel (12) for sucking air to the air exhaust channel (4).

2. Facility according to claim 1, characterised in that the distance (a) between outer (2) and inner glazing (3) is approximately 40 mm.

3. Facility according to claim 1 or 2, characterised in that the distance (b) between inner glazing (3) and sun screen (5) is between 20 and 40 mm.

4. Facility according to one of the preceding claims, characterised in that the surface of the sun screen (5) facing the inner glazing (3) has sections (9) which absorb the incident sun radiation (8) in the winter.

5. Facility according to claim 4, characterised in that the surface of the sun screen (5) facing the inner glazing (3) has profiles (6) which reflect the sun rays (7) striking it directly or indirectly via adjacent profiles, whereby a selective coating is arranged between the profiles (6) in such a way that sun radiation is only incident upon the coating when the sun is low in the sky.

**Revendications**

1. Dispositif pour climatiser un local fermé qui présente, à son côté extérieur exposé aux intempéries, un vitrage extérieur (2) qui, avec un vitrage intérieur (3) qui en est espacé à l'intérieur du local, forme un passage (4) pour l'air d'évacuation, un store solaire (5) étant prévu du côté du vitrage intérieur tourné vers l'intérieur du local et délimitant, avec le vitrage intérieur, un espace intermédiaire (10) qui est en communica-

5

tion avec ledit passage d'air d'évacuation par l'intermédiaire d'une ouverture d'aspiration d'air (11) obturable, caractérisé en ce que :

a) la distance a entre le vitrage extérieur (2) et le vitrage intérieur (3) n'a qu'une grandeur telle qu'un écoulement d'air (13) défini et largement laminaire s'établisse dans le passage d'évacuation d'air (4) ;

b) la surface du store solaire (5) tournée vers le vitrage intérieur (3) est agencée d'une manière telle qu'une fraction la plus grande possible du rayonnement solaire incident (7) soit réfléchie vers le vitrage intérieur ;

c) le démasquage de l'ouverture d'aspiration d'air obturable (11) est commandé en fonction de la position du store solaire (5) et/ou de la température dans l'espace intermédiaire (10) entre le vitrage intérieur (3) et le store solaire (5) ;

d) les ouvertures d'aspiration d'air (11) s'ouvrent dans le passage d'aspiration (12) du passage (4) pour l'air d'évacuation.

2. Dispositif suivant la revendication 1, caractérisé en ce que la distance a entre le vitrage extérieur (2) et le vitrage intérieur (3) est d'environ 40 mm.

3. Dispositif suivant la revendication 1 ou 2, caractérisé en ce que la distance b entre le vitrage intérieur (3) et le store solaire (5) est d'environ 20 à 40 mm.

4. Dispositif suivant l'une quelconque des revendications précédentes, caractérisé en ce que la surface du store solaire (5) tournée vers le vitrage intérieur (3) présente des sections (9) qui absorbent le rayonnement solaire (8) que l'on rencontre en hiver.

5. Dispositif suivant la revendication 4, caractérisé en ce que la surface du store solaire (5) tournée vers le vitrage intérieur (3) présente des profilages (6) qui réfléchissent les rayons solaires incidents (7) directement ou indirectement par l'intermédiaire de profilages voisins vers le vitrage intérieur (3), un revêtement sélectif étant disposé entre les profilages (6) d'une manière telle qu'ils ne soient attaqués par les rayons solaires (8) que lorsque la position du soleil est basse.

Fig. 1

Fig. 2

2/2

**Fig3**

Hoher Sonnenstand

Niederer Sonnenstand

1

q

5

6

7

8

2

a

13

3

4